# EUROPEAN PATENT APPLICATION

(11) **EP 4 702 836 A1**
(43) Date of publication of application: **04.03.2026**
(21) Application number: 25194342.9
(22) Date of filing: 06.08.2025
(51) Int. Cl.: A01K 5/00, A01F 25/20, B01F 27/921, B01F 33/502

(54) **ELECTRIC MIXING WAGON, METHOD OF CONTROLLING AN ANIMAL FEEDING PROCESS USING SUCH A MIXING WAGON AND COMPUTER PROGRAM EXECUTING SUCH METHOD OF CONTROL**

(30) Priority: 03.09.2024 IT 202400019591
(71) Applicant: Faresin Industries SpA, 36042 Breganze (VI) (IT)
(72) Inventor: FARESIN, Sante, 36040 Breganze (VI) (IT); FARESIN, Silvia, 36040 Breganze (VI) (IT); FARESIN, Giulia, 36040 Breganze (VI) (IT)
(74) Representative: Autuori & Partners S.R.L.

(57) **Abstract**

A mixing wagon (1) comprising a load-bearing frame (2) which supports: wheels (3) for supporting the load-bearing frame (2) on the ground and the movement thereof; a tank (4) for containing components of a feed mixture; operating units (5, 6, 7, 8, 9) for carrying out corresponding functions of the mixing wagon (1), comprising a propulsion unit (5) for driving the wheels (3) and a mixing unit (6) in rotation to mix the components in the containment tank (4); a drive unit (10) for actuating the operating units (5, 6, 7, 8, 9); a control unit (11) for allowing a driver to control the drive unit (10). The drive unit (10) comprises electric motors (12) for actuating each operating unit (5, 6, 7, 8, 9).

## Description

### Field of the invention

The present invention relates to the technical field of animal feed and in particular it relates to a mixing wagon for the production of a feed mixture for animals and a method for controlling an animal feeding process.

### State of the prior art

As known, in modern livestock farming, livestock are fed with feed mixtures obtained by mixing various components, for example various types of fodder, concentrates and additives, to form an even mixture, ensuring that each animal receives a balanced diet in order to optimize the quality of their products.

The mixture may be prepared according to the technique known as unifeed, which provides for preparing and administering to cattle portions of feed that are nutritionally complete, so as to avoid further supplements.

The technique mentioned above requires that the various feed components, appropriately shred, are mixed in precise ratios, obtaining what is referred to as "precision feeding". In turn, precision feeding is an important aspect of so-called "precision livestock farming" (PLF).

Monitoring and checking in detail the correctness of feeding are essential aspects considering that, for dairy cattle farming, feeding accounts for more than half of the production costs.

Basically, feed costs, estimated to produce 100 kg of milk, account for more than 45% of total production costs, with wide variability over the years due to the variability of the availability of raw materials and the volatility of prices, especially of concentrated products.

The precision in the formulation of rations and their distribution to livestock allows to avoid various drawbacks, including inefficiency in the digestive process, quantity-quality losses in production, reduction in reproductive performance, increased production costs, waste and environmental impact, as well as animal health and well-being problems that ultimately lead to increased drug consumption.

It is known that the so-called "mixing wagons" are machines that are particularly adapted to achieve the results described above.

In general, a mixing wagon of the known type comprises a containment tank into which there are conveyed the components of the mixture which are shred and mixed into a sufficiently even mixture by means of one or more rotary augers arranged in the containment tank mentioned above.

Furthermore, there are present weight sensors for measuring the amount of each added component, so as to allow a precise formulation of the mixture.

There may also be present a loading system, for example a conveyor belt and/or an auger, provided at the input end with a milling cutter for processing the material which is loaded so as to remove from the silos and split apart the fibre, so as to facilitate the obtainment of a homogeneous mixture.

Sometimes, there is present a discharge system for distributing the mixture outside thus produced outside the containment tank in the pre-established amount, and which may comprise a conveyor belt, discharge auger, and other devices which facilitate the even distribution of the mixture.

The devices described above are driven by an internal combustion engine, generally diesel, which, in the case of a wagon towed by a tractor, is the engine of the tractor, to which the wagon is connected by means of a power take-off, while in the case of a self-propelled wagon it is inside the mixing wagon.

The internal combustion engine mentioned above drives the pumps of the hydraulic system which, in turn, drive the hydraulic actuators designed for the various functions provided for by the mixing wagon, including wheel drive, mixing, milling, loading, unloading, etc.

A mixing wagon of the known type described above is now well-established in the livestock feeding process, as it ensures the obtainment of a feed mixture that has precise, homogeneous and constant composition over time, which is essential for the correct feeding of cattle.

Furthermore, a mixing wagon can limit the time and effort required by the livestock farmer for the preparation and distribution of feed, create rations customised to the specific nutritional needs of the animals and, last but not least, reduce waste by allowing to obtain an accurate mixing and even distribution of the mixture to the animals.

Despite the advantages mentioned above, due to the use of the internal combustion engine for the production of the drive force, a mixing wagon of the known type has the drawback of having a relatively high environmental impact, both in terms of pollutants and CO₂ emitted.

A further drawback lies in the overall reduced efficiency of the internal combustion engine, also due to its limited ability to vary the power output and therefore the fuel consumed as operating conditions change.

A further drawback related lies in the use of the internal combustion engine is the risk of contamination of the feed mixture by the pollutants, which leads to a reduction in the quality of the mixture and, as a result, of the animal products thus obtained, as well as putting animal health at risk.

The internal combustion motor drive has the further drawback of causing noises that are annoying to the operator.

A further drawback of the mixing wagons of the known type lies in the fact that they are not suitable for real-time monitoring of the animal feeding process. Therefore, it is difficult to optimise the process in order to reduce its environmental impact and increase the quality of the products obtained.

### Summary of the invention

The object of the present invention is to overcome the drawbacks mentioned above by providing a mixing wagon for the production of animal feed mixtures which allows to reduce the environmental impact of the process, with particular reference to the pollutants and to the CO₂ emitted. Generally, such object may be summarised in terms of increasing the environmental sustainability of the process as a whole.

Another object of the invention is to provide a method for controlling an animal feeding process which allows to optimise the energy efficiency of the process and/or the qualitative of the obtained products.

The objects mentioned above are attained by a mixing wagon according to claim 1.

The objects mentioned above are also attained by a method for controlling an animal feeding process according to claim 14.

The objects mentioned above are also attained by a computer programme which implements the control method mentioned above, according to claim 15.

Advantageously, the decrease in the environmental impact which can be obtained by the invention allows to provide a feeding process that is more compliant with the increasingly strict environmental restrictions imposed by the legislator.

Still advantageously, the greater efficiency of the process leads to a decrease in the production costs.

Still advantageously, the decrease in pollutant emissions facilitates the quality of the feed mixture produced with the mixing wagon, the well-being of the animals and, therefore, the quality of their products.

Further advantageous characteristics of the various aspects of the invention are specified in the relative dependent claims.

These and other objects and advantages which will be mentioned below will be more apparent from description outlined below of some preferred embodiments of the invention, which are shown by way of non-limiting example with reference to the attached drawings.

### Brief description of the drawings

- Fig. 1: shows the mixing wagon of the invention, in lateral view.
- Fig. 2: shows the mixing wagon of Fig. 1, in axonometric view.
- Fig. 3: shows a block flow diagram of a part of the mixing wagon of Fig. 1.

### Detailed description of some preferred embodiments

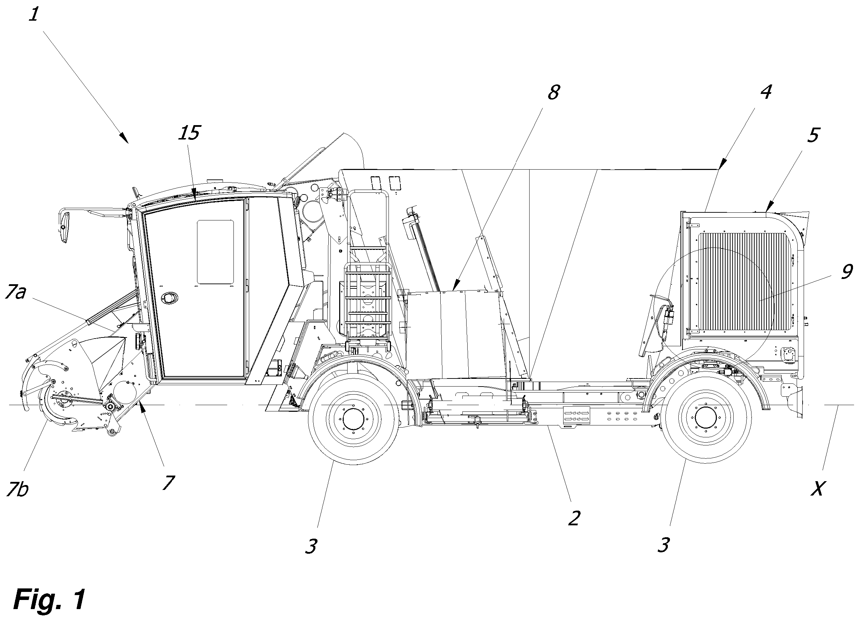

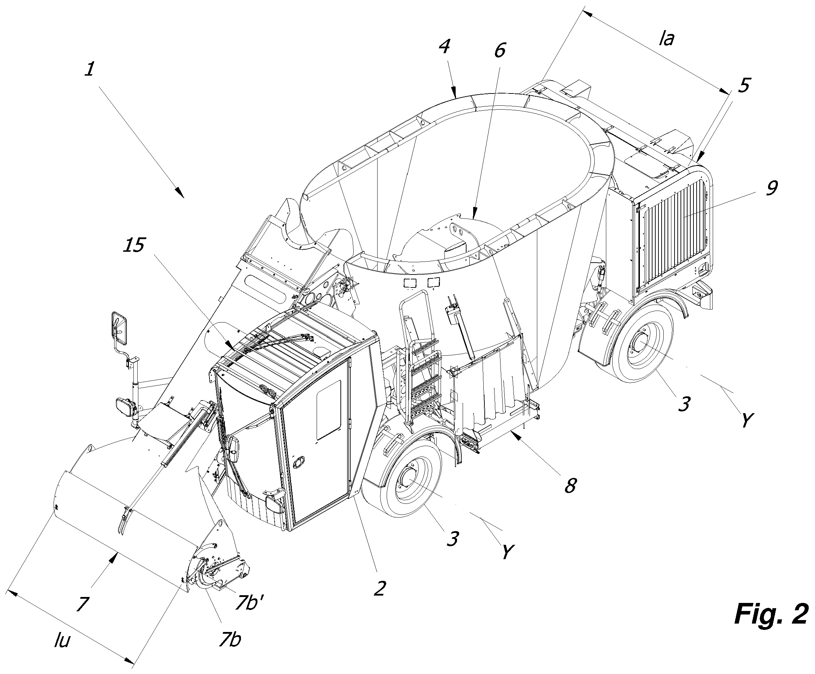

The mixing wagon of the invention, indicated in fig. 1 and 2 in its entirety with 1, is particularly adapted to produce a feed mixture intended for animal feed.

The mixing wagon **1** comprises a load-bearing frame **2** which supports a plurality of wheels **3** for supporting the load-bearing frame **2** on the ground and for the movement thereof.

Advantageously, the frame **2** may have an extension along a longitudinal axis **X.**

The mixing wagon **1** further comprises a containment tank **4** for containing the components of the feed mixture, which can be provided with lateral openings for discharging the feed mixture.

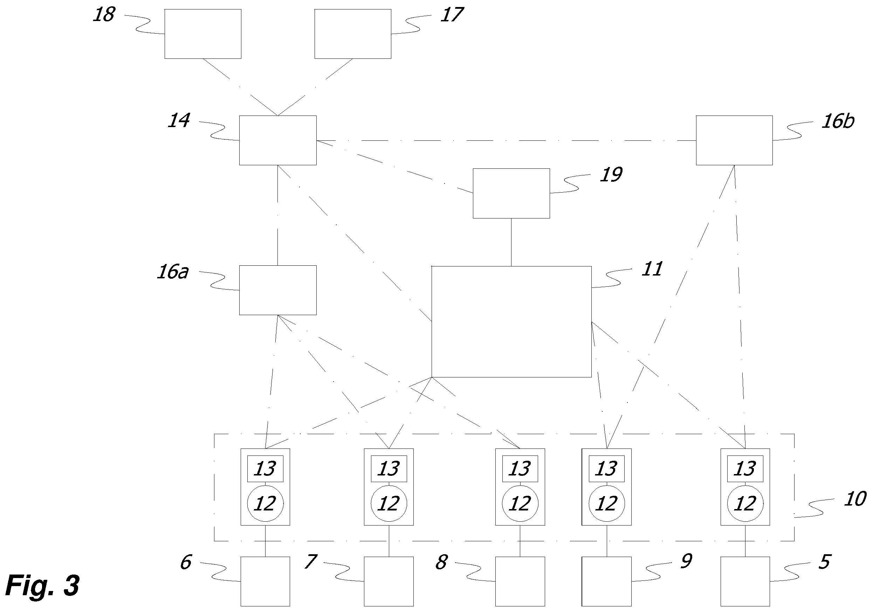

Various operating units **5, 6, 7, 8, 9** for carrying out corresponding functions of the mixing wagon **1,** which are shown schematically shown in fig. 3, are also present. The latter figure shows in dashed lines the functional connections between the various elements of the mixing wagon **1.**

One of the operating units mentioned above is a propulsion unit **5** for driving the wheels **3** so as to allow the movement of the mixing wagon **1.**

Preferably, the aforementioned wheels **3** are distributed on two drive axles, a front axle and a rear axle, for four-wheel drive.

Suitably, the axles have an extension along axes **Y** perpendicular to the axes **X** and the wheels **3** are coupled to the axles by means of suitable hubs.

Advantageously, the connection hubs with at least one of the axles can be connected with the frame **2** by means of parallel arms.

The frame **2** may further include a suspension system for connection with the parallel arms so as to allow the wheels **3** to move vertically and adapt the movement to the unevenness of the ground.

Advantageously, the suspension system may include hydro-pneumatic suspensions.

Preferably, such connection with parallel arms and suspensions may solely regard the wheels **3** of the front axle, while the rear axle may be rigidly constrained to the frame **2.**

Still preferably, both the axles are steering and driven by a steering system which allows three different steering modes, that is the steering of the front axle alone, the steering of both axles in a concentric mode and the steering of both axles in a transversal movement mode.

The latter may therefore occur along a direction perpendicular to the axis **X.**

To this end, the propulsion unit **5** may include a steering system configured to allow such steering.

Another of the aforementioned operating units is a mixing unit **6** for mixing the components mentioned above in the containment tank **4.**

Preferably but not necessarily, the mixing unit **6** comprises an auger, even more preferably with vertical axis, arranged in the containment tank **4.**

Preferably, the aforementioned auger is provided with knives in the peripheral part thereof which carry out the function of shredding and mixing components.

Still preferably, the walls of the containment tank **4** are provided with movable abutments which can be inserted or removed to facilitate the step of cutting fibrous products.

A drive unit **10** drives each operating unit **5, 6, 7, 8, 9.**

As observable in fig. 3, the drive unit **10** comprise one or more electric motors **12** designed to actuate each operating unit **5, 6, 7, 8, 9.** In this manner, the actuation of the operating units does not require any internal combustion engine.

Therefore, it is clear that due to the aforementioned electric motors **12,** the mixing wagon 1 is entirely electrical and it does not require the use of fuel.

Therefore, there is obtained the object of reducing the environmental impact of the process for producing the feed mixture, in particular reducing the emissions of pollutants and CO₂, so as to be obtain an environmentally more sustainable process.

Furthermore, the use of electric motors **12** allows to avoid the use of elements of the mixing wagons with internal combustion motor drive according to the prior art which carry out the corresponding functions, including: the internal combustion engine, the system for the post-treatment of exhaust gases, the diesel tank, the additive (AdBlue) tank and the part of the hydraulic system designed for propulsion and mixing, including the heat exchanger, the pumps and the drive and mixing motors, as well as any further components which drive the other operating units which will be described below.

The elimination of the internal combustion motor drive also results in a substantial decrease in the noise of the mixing wagon 1, with the advantages of a greater comfort for the operator and a lesser disturbance to the animals, which can contribute to improving the product.

Preferably, there is provided for a control unit **11** which allows a driver to control the operating units **5, 6, 7, 8, 9** mentioned above. The control assembly **11** is preferably housed in a driving cabin **15** supported by the load-bearing frame **2** and, still preferably, it comprises an interface **19** in the form of a display.

Still preferably, the feeding of the operating units **5, 6, 7, 8, 9** occurs by means of one or more power distribution units ("PDU"). Fig. 3 shows two of the units mentioned above, indicated with **16a** and **16b.** Furthermore, it is clear that variant embodiments of the invention may provide for a number of the units mentioned above other than two.

Still preferably, the drive unit **10** comprise one or more accumulators **14** for powering the electric motors **12.** There may also be provided for a battery charger **17** for the aforementioned accumulators **14** and a DC/DC converter **18.**

Still preferably, the drive unit **10** comprises an inverter **13** associated with each electric motor **12** so as to control the rotation speed thereof.

The inverters **13** mentioned above allow to modulate the performance of the electric motors **12** instant by instant so as to adapt them to the request, so as to increase the overall operative efficiency of the mixing wagon **1** and the independence of the accumulator **14,** to the further advantage of the operating costs and overall environmental impact.

Preferably, the operating units comprise a loading unit **7** for loading the components into the containment tank **4.**

Preferably, the loading unit **7** comprises a conveyor belt **7a,** or other functionally equivalent conveyor device.

Still preferably, the loading unit **7** comprises a milling cutter **7b** provided with blades for processing components before they are loaded into the containment tank **4.** More preferably, the milling cutter **7b** is arranged at the input edge of the conveyor belt **7a** mentioned above.

Advantageously, the frame **2** may have a width **la** identified at the most protruding lateral areas of the frame **2,** measuring it along an axis perpendicular to the axis **X.**

For example, such width la may measure between 1.8 - 2.5 m.

Suitably, the milling cutter **7b** may be provided with a rotary cutting cylinder **7b'** also provided with blades for processing the components before they are loaded into the containment tank **4.**

Preferably, the cylinder **7b'** may be positioned perpendicularly to the axis **X** and it can have a longitudinal extension of length lu, measured along the axis perpendicular to the axis **X,** contained in the measurement of the width **la.**

In other words, the milling cutter **7b** may be contained in the lateral overall dimensions of the frame **2.**

In any case, the cylinder **7b'** may have a length lu such to allow to minimise the component loading times, without lateral movements of the cylinder **7b'** which therefore does not translate along the axis perpendicular to the axis **X.**

For example, the frame **2,** the cylinder **7b'** may have a length lu measuring 1.9 - 2.1 m.

Such solution allows to operate within the physical limits of the frame **2,** optimising safety, efficiency and obtaining a compact wagon **1.**

Still preferably, the operating units comprise a discharge unit **8** for discharging the feed mixture from the containment tank **4** once produced.

Preferably, each electric motor **12** is designed to drive a corresponding of the operating units **5, 6, 7, 8, 9** mentioned above independently from the electric motors **12** which drive the other operating units.

The independent actuation of each operating unit facilitates the obtainment of a high efficiency of the mixing wagon **1.**

Still preferably, the operating units comprise a hydraulic service unit **9** to power-supply one or more hydraulic actuators, comprising at least one pump which is in turn driven by a corresponding electric motor **12.** Some of the hydraulic actuators mentioned above may be part of one or more operating units **5, 6, 7, 8** for carrying out corresponding specific functions such as for example actuate the conveyor belts of the loading **7** and/or unloading **8** units, the power steering of the propulsion unit **5,** etcetera.

The configuration described above is for example adapted to the actuation of the loading unit **7,** in particular of the conveyor belt **7a** and the milling cutter **7b,** as well as other auxiliary systems of the mixing wagon **1** such as the power steering, brakes, etcetera.

Such solution allows to obtain a mixing wagon **1** that is highly efficient, functional and energetic.

As a matter of fact, the motor **12** designed to drive the pumps of the hydraulic services **9** may be correctly dimensioned for the sole management of the hydraulic actuators part of one or more operating units **5, 6, 7, 8** involved, with resulting energy optimisation, overall efficiency of the wagon **1** and simplification of the management of the various operating units **5, 6, 7, 8, 9.**

Still preferably, the mixing wagon **1** comprises a sensor unit, not shown in the drawings but per se known, for weighing the components of the feed mixture which are loaded into the containment tank **4.**

Preferably, the sensor unit comprises a plurality of weighing sensors interposed between the load-bearing frame **2** and the containment tank **4** so as to allow to weigh the latter together with the components contained therein before and after loading each component. For example, the containment tank **4** lies on four of the weighing sensors mentioned above.

Preferably, there is present a display device for managing the ration to be loaded directly from the cabin **15.**

Operatively, the livestock feeding process provides for loading components of the mixture, for example fodder, concentrates, additives, etcetera, into the containment tank **4.** The loading mentioned above may for example be carried out by means of the loading unit **7.**

During the loading, the sensor unit weighs the various components which are progressively loaded so as to ensure that each component is added in the right proportions, with the advantage of keeping the consistency of the diet constant and meet the nutritional needs of the livestock.

Once loaded, all components, the auger of the mixing unit **6** is activated. The rotary movement of the auger raises and mixes the components, creating a homogeneous feed mixture. The mixing time may vary depending on the type of ingredients and the capacity of the mixing wagon.

After the mixing, the ration is ready to be distributed. The actuation of the discharge unit **8** allows to discharge the mixture in the livestock feeding points, distributing it evenly so as to ensure that each animal receives a balanced portion of the mixed ration.

By way of example, the party filing the present application observed that the mixing wagon of the invention allows to increase the efficiency which, in terms of saving per feed mixture weight unit with respect to a mixing wagon according to the prior art, can reach 45%.

The mixing wagon **1** described above is particularly suitable to be used in a method for controlling an animal feeding process. As a matter of fact, the various operating units **5, 6, 7, 8, 9** of the mixing wagon **1** are adapted to the application of a sensor system which allows to monitor the operations carried out by each operating units in real time.

The aforementioned control method comprises the following operations.

First and foremost there is collected a first plurality of data representing the development of one or more operating parameters of the mixing wagon **1** over time during the process for producing the feed mixture. The aforementioned operating parameters may for example comprise the weights and/or the by weight fractions of the various components of the feed mixture, energy consumption, wagon performance, etcetera. The data just mentioned above may be obtained by the aforementioned sensor system.

Further, the method provides for collecting a second plurality of data representing the development of one or more quality parameters of the feed mixture over time when feeding the livestock. The quality parameters may for example comprise the quantity and quality of the food rations, quantity and quality of the products obtained from the animal, quantity and quality of the faeces of the animals, etcetera.

The data mentioned above may be determined, for example, by means of near infrared (NIR) technologies.

With regard to the quality of the rations, it may be defined, for example, depending on their compliance with the "UNIFEED" technique mentioned above.

The method also provides for the possibility of monitoring pre-set parameters of the process, for example the quality of the obtained animal products, defined depending on the first plurality of data and the second plurality of data.

The aforementioned method has the advantage of allowing a continuous monitoring of the process, allowing to promptly identify deviations and correct them.

Furthermore, the organic collection of data advantageously allows to track the products along the entire process, from the production of feed mixture all the way to the animal products.

The method described above can for example be implemented by means of a computer program comprising a series of instructions configured so that, when run by a computer operatively associated with the mixing wagon 1, they run the control method.

In the light of the above, it is clear that the invention attains the pre-established objects.

In particular, by replacing the internal combustion engine with one or more electric motors, the mixing wagon of the invention allows a substantial decrease in the environmental impact of the process for producing the feed mixture, achieving greater environmental sustainability.

The party filing the present invention observed that the mixing wagon according to the invention allows an average reduction of the emissions during use amounting to 75%, as well as an increase in the overall efficiency deriving from low consumption.

Furthermore, the mixing wagon is suitable to provide a method for controlling the process which allows to optimise its energy efficiency and/or the quality of the obtained products.

The invention is susceptible to modifications and variants all falling within the inventive concept outlined in the attached claims. In particular, the elements of the invention can be replaced by other technically equivalent elements.

Furthermore, the materials may be selected depending on the needs, without departing from the can scope of protection of the invention.

Furthermore, one or more elements of a specific embodiment of the invention technically compatible with another specific embodiment may be introduced into the latter additionally to or to replace elements of the latter.

Should the technical elements specified in the claims be followed by reference signs, such reference signs are included with the sole purpose of improving the intelligibility of the invention and, therefore, they do not entail any limitation to the claimed scope of protection.

## Claims

1. Mixing wagon (1) comprising a load-bearing frame (2) which supports:
- a plurality of wheels (3) for supporting said load-bearing frame (2) on the ground and its movement;
- a tank (4) for containing one or more components for a feed mixture;
- a plurality of operating units (5, 6, 7, 8, 9) for carrying out corresponding functions of said mixing wagon (1), said plurality of operating units (5, 6, 7, 8, 9) comprising a propulsion unit (5) for the rotation of said wheels (3) and a mixing unit (6) to mix said components in said containment tank (4);
- a drive unit (10) for operating each one of said operating units (5, 6, 7, 8, 9) of said plurality;
- a control unit (11) for allowing driver to control said drive unit (10);
**characterised in that** said drive unit (10) comprises one or more electric motors (12) for actuating each of said operating units (5, 6, 7, 8, 9).

2. Mixing wagon (1) according to claim 1, **characterised in that** said drive unit (10) comprises an inverter (13) associated with each of said one or more electric motors (12) for controlling the rotational speed thereof.

3. Mixing wagon (1) according to any one of claims 1 or 2, **characterised in that** said drive unit (10) comprises one or more accumulators (14) for powering said one or more electric motors (12).

4. Mixing wagon (1) according to any one of the preceding claims, **characterised in that** said plurality of operating units (5, 6, 7, 8, 9) comprise a loading unit (7) for loading said components in said containment tank (4).

5. Mixing wagon (1) according to the preceding claim, wherein said load-bearing frame (2) has an extension along a first axis (X), the same having a predetermined width (la) identified along an axis substantially perpendicular to said first axis (X), **characterised in that** said at least one loading unit (7) comprises a milling cutter (7b) having a rotor cylinder (7b') for non-movable cutting along said axis perpendicular to said first axis (X) and with a length (lu) shorter than said width (la) of said frame (2), so that said milling cutter(7b) is contained in the lateral overall dimensions of the latter.

6. Mixing wagon (1) according to any one of the preceding claims, **characterised in that** said plurality of operating units (5, 6, 7, 8, 9) comprise a discharge unit (8) for discharging said feed mixture outside said containment tank (4).

7. Mixing wagon (1) according to any one of the preceding claims, **characterised in that** each of said electric motors (12) is designed to drive a corresponding of said operating units (5, 6, 7, 8, 9) irrespective of the electric motors (12) which drive the other of said operating units (5, 6, 7, 8, 9).

8. Mixing wagon (1) according to any one of the preceding claims, **characterised in that** one or more of said operating units (5, 6, 7, 8, 9) comprise one or more hydraulic actuators driven by at least one pump which is in turn driven by a corresponding of said electric motors (12).

9. Mixing wagon (1) according to any one of the preceding claims, **characterised in that** it comprises a sensor unit for weighing said components of said feed mixture that are loaded in said containment tank (4).

10. Mixing wagon (1) according to any one of the preceding claims, wherein said load-bearing frame (2) has an extension along a first axis (X), **characterised in that** said wheels (3) are connected with a front axle and a rear axle extending along second axes (Y) perpendicular to said first axis (X), said load-bearing frame (2) including a suspension system for the operative connection with the wheels (3) of at least one of said front and rear axle.

11. Mixing wagon (1) according to the preceding claim, **characterised in that** said load-bearing frame (2) is operatively connected with the wheels (3) of one of said front and rear axle by means of said suspension system, the other of said front and rear axle being rigidly connected with said load-bearing frame (2).

12. Mixing wagon (1) according to the preceding claim, **characterised in that** said front and rear are steering, said propulsion unit (5) including a steering system configured to allow the steering of the front axle alone, the steering of both axles in a concentric mode and the steering of both axles in a transversal movement mode along a direction perpendicular to said first axis (X).

13. Mixing wagon (1) according to any one of the preceding claims **characterised in that** said drive unit (10) is without internal combustion engines.

14. Method for controlling an animal feeding process, **characterised in that** it comprises the following operations:
- producing a feed mixture through a mixing wagon (1) according to any one of the preceding claims;
- using said feed mixture for feeding livestock;
- collecting a first plurality of data representative of the development of one or more operating parameters of said mixing wagon (1) during said animal feeding process over time, for example including energy consumption and performance;
- collecting a second plurality of data representative of the development of one or more quality parameters of said feed mixture over time, for example including quantity and quality of food rations, quantity and quality of the products obtained by said livestock, quantity and quality of faeces of said livestock;
- monitoring preset parameters of said process defined based on said data of said first plurality and said second plurality.

15. Computer programme comprising a series of instructions configured to be run by a computer operatively associated with a mixing wagon (1) according to any one of claims 1 to 13 so as to carry out the following operations:
- collecting a first plurality of data representative of the development of one or more operative parameters of said mixing wagon (1) over time during production of a feed mixture, said one or more operative parameters potentially comprising energy consumption and performance of said mixing wagon (1);
- collecting a second plurality of data representative of the development of one or more quality parameters of said feed mixture over time during the use of said feed mixture to feed livestock, said one or more quality parameters potentially comprising quantity and quality of food rations, quantity and quality of products obtained by said livestock, quantity and quality of faeces of said livestock;
- displaying and monitoring preset parameters of said operations of producing and using said feed mixture defined based on said data of said first plurality and of said second plurality.
